# EUROPEAN PATENT SPECIFICATION

(11) **EP 1 896 642 B1**
(45) Date of publication and mention of the grant of the patent: **21.11.2012**
(21) Application number: 06769079.2
(22) Date of filing: 28.06.2006
(51) Int. Cl.: D06F 33/02, D06F 39/00

(54) **REMOTE MONITOR HAVING AVATAR IMAGE PROCESSING UNIT**
FERNMONITOR MIT BILDVERARBEITUNGSEINHEIT FÜR VIRTUELLE FIGUREN
ECRAN A DISTANCE AYANT UNE UNITE DE TRAITEMENT D'IMAGE AVEC AVATARS

(30) Priority: 30.06.2005 KR 20050058250
(43) Date of publication of application: 12.03.2008
(73) Proprietor: LG Electronics Inc., Seoul 150-721 (KR)
(72) Inventor: AHN, Byung Hwan, Gimhae-si, Gyeongsangnam-do, 621-754 (KR); JEONG, Seong Hae, Changwon-si, Gyeongsangnam-do, 641-010 (KR)
(74) Representative: Vossius & Partner
(86) International application number: PCT/KR2006/002503
(87) International publication number: WO 2007/004802

(56) References cited:
- EP-A- 1 139 304
- EP-A2- 1 139 304
- WO-A-02/086219
- US-A1- 2001 049 846
- US-A1- 2002 017 117
- US-A1- 2002 095 483
- US-A1- 2002 095 483
- US-A1- 2004 107 510
- US-A1- 2004 134 238
- US-A1- 2004 134 238
- US-A1- 2005 109 070
- US-A1- 2005 109 070

## Description

### Technical Field

The present invention relates to a remote monitor having an avatar image processing unit for making access to at least one home appliance so as to be able to communicate therewith for representing information on operation progress and control of the home appliance with an avatar.

### Background Art

In general, home appliances are sold to consumers, and used by the consumers for a long time by operation of the consumers, that influences reliability of the manufacturer and the product, directly. Accordingly, in order to provide accurate product information to the consumers of a variety of classes, many means are suggested.

The product information, including direction of use, countermeasures for malfunctions, and information on an operation state displayed during operation of the product, is provided in a manual for consumers in a step of shipment of the product, presently.

WO 02/086219 A1 describes a household device having a display, which comprises a layer of material being able to be influenced electrically pixel by pixel such that any device-related displays can be seen on the display.

US 2005/0109070 A1 describes a laundry system comprising a home terminal device and laundry apparatus. The terminal device includes a short-range communication device, a long-range communication device and a terminal device controller transmitting information about laundry and information about a laundry constraint to a server connected to an internet, thereby obtaining an operation control program for the laundry apparatus.

### Disclosure of Invention

### Technical Problem

However, in general, such a manual fails to be means for providing proper information when required because it is a trend that the user does not read the manual carefully except a case the product is out of order, and it is difficult to keep the manual.

Moreover, in general, a representation of the present state on operation progress or control of the product is a light flashing or characters displayed, on a small screen, not on a large screen, too.

Particularly, in a case a remote monitor unit applicable to a home appliance which has a remote control function by using a home network and a radio communication is used, the information to be provided to the user is limited.

Accordingly, it is difficult to represent a variety of operation states for various operation conditions of the home appliance.

Such a related art type of product information transmission is made on the assumption that the user pays attention to it, yet has a poor information transmission capability.

### Technical Solution

An object of the present invention is to provide a remote monitor having an avatar image processing unit for making access to at least one home appliance so as to be able to communicate therewith for representing information on operation progress and control of the home appliance with an avatar.

The object of the present invention can be achieved by the features of the claims. A remote monitor is provided including a communication unit accessible remotely to at least one home appliance so as to be able to communicate therewith for receiving data through a communication unit in the home appliance having a system microcomputer for operating an entire system and the communication unit which makes data communication, and a remote display unit having an avatar image unit for displaying an avatar image according to the data received through the communication unit.

The remote display unit further includes an operation display unit for displaying information on an operation progress of the home appliance having the remote display unit accessed thereto so as to be able to communicate therewith.

Preferably, the display of the avatar image and the operation progress are made at the same time on separate areas of a display panel, or in a sequence on an entire area of the display panel repeatedly according to user's selection.

The remote display unit further includes display control means for controlling the avatar image unit and the operation display unit, wherein the display control means includes a first control unit for controlling the avatar image unit, and a second control unit for controlling the operation display unit.

The avatar image has a movement controlled in relation to a representation on the operation display unit.

The remote monitor further includes a key input unit having an avatar control key for inputting a user's selection signal for processing the avatar image, wherein the key input unit can select any one of stored avatars.

The remote display unit further includes an avatar information storage unit for storing the avatar image to be displayed on the avatar image unit, wherein the avatar information storage unit stores a plurality of avatar images.

The communication units of the home appliances and the communication unit of the remote monitor make communication through wire respectively, and the communication through wire is PLC (Power Line Communication)

The communication units of the home appliances and the communication unit of the remote monitor make wireless communication respectively, and the wireless communication is RF communication.

### Advantageous Effects

The remote monitor of the present invention has the following advantages.

The remote monitor of the present invention can access to a home appliance to enable to make communication therewith, and can represent a basic direction of use, and states of operation progress and control of the home appliance with mobile characters.

This enhances visibility of the information at the time of providing the information, to enhance a information transmission performance, and permits to put emphasis on an entertainment factor.

The access to a server with the external device permits to download and store a new avatar to enable various expression.

This permits a variety of representation of operation proper to operation conditions, to enhance competitiveness of the product.

### Brief Description of the Drawings

FIG. 1 illustrates a block diagram of a remote monitor having an avatar image unit in accordance with a preferred embodiment of the present invention; and

FIG. 2 illustrates a home appliance having a remote monitor applied thereto in accordance with a preferred embodiment of the present invention.

### Best Mode for Carrying Out the Invention

Other objects, features, and advantages of the present invention will be evident through the following detailed description of embodiments of the present invention.

Preferred embodiments of a remote monitor having an avatar image unit will be described in detail with reference to the attached drawings.

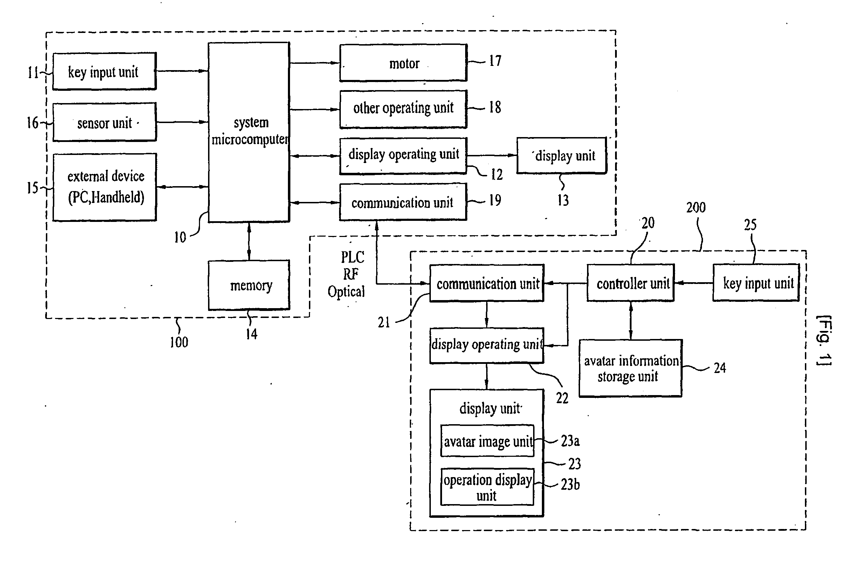

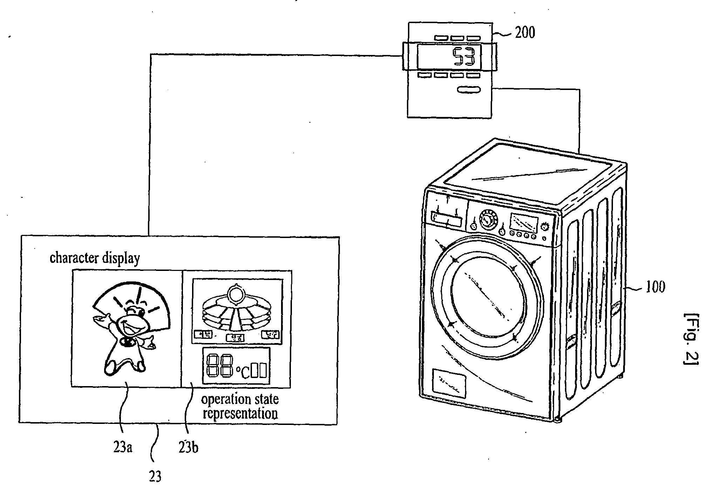

FIG. 1 illustrates a block diagram of a remote monitor having an avatar image unit in accordance with a preferred embodiment of the present invention, and FIG. 2 illustrates a home appliance having a remote monitor applied thereto in accordance with a preferred embodiment of the present invention.

The present invention suggests a remote monitor having an avatar image unit for making access to at least one home appliance so as to communicate therewith to represent direction of use and a state of operation progress of the home appliance with a three dimensional character, i.e., avatar, for enhancing visibility of information to improve an information transmission performance.

Besides improvement of the visibility, the information transmission by using an avatar permits to put emphasis on an entertainment factor of the present consumer trend, to enhance consumers' friendliness to the product.

The display of the avatar image on the remote monitor permits to enhance an information transmission performance in remote control and monitoring of a plurality of home appliances.

The avatar, a manifestation or personification, is an animation character serving as a user in a cyber space. As the Internet age opens, the avatar is a graphic icon representing oneself in chatting or so in a three dimension, or virtual reality game, or in a web.

That is, the avatar is a virtual body representing oneself in a virtual society of graphic. Besides chatting or an online game, the fields in which the avatar is in use presently are expanded to shopping malls, virtual education, virtual offices, and so on.

The present invention provides a remote monitor having an avatar image processing unit for the user to employ the avatar as a helper in an information transmission process.

The avatar of the present invention performs a particular action in a form which can characterize an operation of a home appliance, or has a form of movement that can transmit particular information.

The remote monitor having an avatar image processing unit includes home appliances each having a communication unit for enabling data communication with remote control and monitoring means, and a remote monitor having an avatar image unit for receiving data on an avatar image received from the communication unit remote from the home appliances and processing and displaying the avatar image.

A detailed system is as illustrated in FIG. 1.

The home appliance 100, such as a washing machine, a dryer, a dish washer, an air conditioner, and so on includes a system microcomputer 10 for use as main control means, a key input unit 11 for applying a user's selection signal for controlling the home appliance, a memory 14 for storage of information required for management of the system, a motor 17 for driving the home appliance, other operating units 18, a display operating unit 12 for controlling display of information on the present operation progress state and control during operation of the home appliance, a display unit 13 for displaying relevant information in response to a driving signal, and a sensor unit 16 for detecting a temperature, a rotation speed, and so on required for operation progress of the home appliance.

In the meantime, the home appliance has the communication interface (not shown) built therein for access to an external device 15, such as a PC, a wireless notebook, wireless network, and so on for transmission/reception of a required data.

The home appliance of the present invention having the foregoing system includes a communication unit 19 for enabling PLC (Power Line Communication), RF communication, and Optical Communication for remote control and monitoring of the home appliance.

The present invention enables control of display of the avatar image according to an operation progress state of the home appliance at the remote monitor which makes remote control and monitoring of the home appliance.

For this, a remote display unit 200 includes a control unit 20 for controlling display of a kind of avatar of user's selection, i.e., processing of an avatar related image, proper to an operation state of the home appliance and a kind of information to be represented, a key input unit 25 having an avatar control key for inputting a signal of user's selection for processing an avatar image through the control unit 20, for an example, a selection/erasure signal of the avatar, a communication unit 21 for receiving a data on the avatar through the communication unit 19 in the home appliance, a display operating unit 22 for providing a driving signal to display a menu and operation state information when operation of the home appliance is selected, and to display the avatar image, a display unit 23 for displaying the menu and the operation state information when operation of the home appliance is selected, and to display the avatar image, in response to the driving signal from the display operating unit 22, and an avatar information storage unit 24 for storing various kinds of avatar image information.

It is apparent that the system microcomputer 10 that is used as main control means of the home appliance can control the remote monitor.

The control unit 20 which is means for controlling the remote display unit 200 may includes a first control unit for controlling the avatar image unit, and a second control unit for controlling the operation display unit which displays information on the operation progress of the home appliance.

The display unit 23 includes an avatar image unit 23a for displaying the avatar image, and an operation display unit 23b for displaying an operation mode of the home appliance, a remained operation time period, and so on.

The avatar image unit 23a and the operation display unit 23b may be fabricated of one display panel, or may be fabricated of independent panels.

In a case the avatar image unit 23a and the operation display unit 23b are fabricated of independent panels, the avatar image unit 23a is fabricated of an LCD (Liquid Crystal Display) panel, and the operation display unit 23b is fabricated of an LED (Light Emitting Diode; luminescent diode) or an LCD panel.

In a case the avatar image unit 23a and the operation display unit 23b are fabricated of one display panel, the display panel may be designed to provide an avatar image area and an operation display area separately to show the avatar image and the operation at the same time, or may be designed to show the avatar image and the operation on the one display panel in a sequence repeatedly by selection.

Moreover, the display unit 23 may have an environment of use, such as a background color, variable by user's selection.

Movement of the avatar image is displayed in connection with display of the operation display unit, or controlled, independently.

The remote monitor of the present invention is able to access to the external device 15 through a communication interface block in the home appliance, to download the avatar information under the control of the system microcomputer 10, to receive the avatar information through the communications unit 19 and 21, and to store in the avatar information storage unit 24 in the remote monitor.

FIG. 2 illustrates a system in which a home appliance having the remote monitor of the present invention applied thereto.

Avatars stored in the avatar information storage unit 24 are selected by the user through the key input unit 25, and avatars selected thus are displayed while movements thereof, colors thereof, and shapes thereof are changed according to operation states of the home appliance.

Of course, it is apparent that avatars different from one another may be set up according to kinds of information to be represented.

Thus, the remote monitor of the present invention can access to a home appliance to enable to make communication therewith, and can represent a basic direction of use, and states of operation progress and control of the home appliance with mobile characters.

It will be apparent to those skilled in the art that various modifications and variations can be made in the present invention without departing from the scope of the inventions. Thus, it is intended that the preset invention covers the modifications and variations of this invention provided they come within the scope of the appended claims and their equivalents.

## Claims

1. A remote monitor comprising:
a communication unit remotely accessible to at least one home appliance so as to be able to communicate therewith for receiving information on an operation progress of the home appliance from a communication unit in the home appliance, the home appliance having a system microcomputer (10) for operating an entire system and for causing the communication unit to communicate information on an operation progress of the home appliance; and **characterized by**
a remote display unit (200) including:
an avatar image unit (23a) for displaying an avatar image according to the data received through the communication unit, and
an operation display unit for displaying information on an operation progress of the home appliance having the remote display unit accessed thereto so as to be able to communicate therewith;
wherein the avatar image has a movement controlled in relation to a representation on the operation display unit, and
wherein the remote monitor is controlled by the system microcomputer of the home appliance.

2. The remote monitor as claimed in claim 1, wherein the display of the avatar image and the operation progress are made at the same time on separate areas of a display panel, or in a sequence on an entire area of the display panel repeatedly according to user's selection.

3. The remote monitor as claimed in claim 1, wherein the avatar image unit (23a) is fabricated of an Liquid Crystal Display.

4. The remote monitor as claimed in claim 1, wherein the operation display unit is fabricated of an Light Emitting Diode.

5. The remote monitor as claimed in claim 1, wherein the remote display unit (200) further includes display control means for controlling the avatar image unit (23a) and the operation display unit.

6. The remote monitor as claimed in claim 5, wherein the display control means (20) includes;
a first control unit for controlling the avatar image unit, and
a second control unit for controlling the operation display unit.

7. The remote monitor as claimed in claim 1, further comprising a key input unit (25) having an avatar control key for inputting a user's selection signal for processing the avatar image.

8. The remote monitor as claimed in claim 7, wherein the key input unit (25) can select any one of stored avatars.

9. The remote monitor as claimed in claim 1, wherein the remote display unit (200) further includes an avatar information storage unit (24) for storing the avatar image to be displayed on the avatar image unit (23a).

10. The remote monitor as claimed in claim 9, wherein the avatar information storage unit (24) stores a plurality of avatar images.

11. The remote monitor as claimed in claim 1, wherein the communication units of the home appliances and the communication unit of the remote monitor make communication through wire, respectively.

12. The remote monitor as claimed in claim 11, wherein the communication through wire is Power Line Communication.

13. The remote monitor as claimed in claim 1, wherein the communication units of the home appliances and the communication unit of the remote monitor make wireless communication, respectively.

14. The remote monitor as claimed in claim 13, wherein the wireless communication is RF communication.

15. The remote monitor as claimed in claim 1, wherein the home appliances include a washing machine, and a dryer.

## Patentansprüche

1. Fernmonitor, der aufweist:
eine Kommunikationseinheit, die zu mindestens einem Haushaltsgerät fernzugriffsfähig ist, um damit kommunizieren zu können von einer Kommunikationseinheit in dem Haushaltsgerät Informationen über den Betriebsablauf des Haushaltsgeräts zu empfangen, wobei das Haushaltsgerät einen Systemmikrocomputer (10) aufweist, um ein ganzes System zu betreiben und die Kommunikationseinheit zu veranlassen, Informationen über einen Betriebsablauf des Haushaltsgeräts zu übertragen; und **gekennzeichnet durch**:
eine Fernanzeigeeinheit (200), die aufweist:
eine Avatar (virtuelle Figur)-Bildeinheit (23a) zur Anzeige eines Avatar-Bilds entsprechend den über die Kommunikationseinheit empfangenen Daten, und
eine Betriebsanzeigeeinheit zum Darstellen von Informationen über einen Betriebsablauf des Haushaltsgeräts, auf das die Fernanzeigeeinheit Zugriff hat, um damit kommunizieren zu können;
wobei eine Bewegung des Avatar-Bilds in Bezug auf eine Darstellung an der Betriebsanzeigeeinheit gesteuert wird, und
wobei der Fernmonitor **durch** den Systemmikrocomputer des Haushaltsgeräts gesteuert wird.

2. Fernmonitor nach Anspruch 1, wobei die Sichtanzeige des Avatar-Bilds und des Betriebsablaufs gleichzeitig auf getrennten Flächen eines Bildschirms oder nacheinander auf einer Gesamtfläche des Bildschirms wiederholt entsprechend der Auswahl durch den Anwender erfolgt.

3. Fernmonitor nach Anspruch 1, wobei die Avatar-Bildeinheit (23a) aus einer Flüssigkristall-Anzeigeeinheit gefertigt wird.

4. Fernmonitor nach Anspruch 1, wobei die Betriebsanzeigeeinheit aus Leuchtdioden gefertigt wird.

5. Fernmonitor nach Anspruch 1, wobei die Fernanzeigeeinheit (200) ferner eine Darstellungssteuereinrichtung für die Steuerung der Avatar-Bildeinheit (23a) und der Betriebsanzeigeeinheit aufweist.

6. Fernmonitor nach Anspruch 5, wobei die Darstellungssteuereinrichtung (20) enthält:
eine erste Steuereinheit zur Steuerung der Avatar-Bildeinheit, und
eine zweite Steuereinheit zur Steuerung der Betriebsanzeigeeinheit.

7. Fernmonitor nach Anspruch 1, der ferner eine Tasteneingabeeinheit (25) mit einer Avatar-Steuertaste zur Eingabe eines Auswahlsignals des Anwenders für die Verarbeitung des Avatar-Bilds aufweist.

8. Fernmonitor nach Anspruch 7, wobei die Tasteneingabeeinheit (25) irgendeinen von gespeicherten Avatars auswählen kann.

9. Fernmonitor nach Anspruch 1, wobei die Fernanzeigeeinheit (200) ferner eine Avatar-Informationsspeichereinheit (24) zum Speichern des an der Avatar-Bildeinheit (23a) anzuzeigenden Avatar-Bilds enthält.

10. Fernmonitor nach Anspruch 9, wobei die Avatar-Informationsspeichereinheit (24) eine Vielzahl von Avatar-Bildern speichert.

11. Fernmonitor nach Anspruch 1, wobei die Kommunikationseinheiten der Haushaltsgeräte und die Kommunikationseinheit des Fernmonitors jeweils drahtgebunden miteinander kommunizieren.

12. Fernmonitor nach Anspruch 11, wobei die Drahtkommunikation eine Kommunikation über das Stromnetz ist.

13. Fernmonitor nach Anspruch 1, wobei die Kommunikationseinheiten der Haushaltsgeräte und die Kommunikationseinheit des Fernmonitors jeweils drahtlos miteinander kommunizieren.

14. Fernmonitor nach Anspruch 13, wobei die drahtlose Kommunikation Hochfrequenzkommunikation ist.

15. Fernmonitor nach Anspruch 1, wobei zu den Haushaltsgeräten eine Waschmaschine und ein Trockner gehören.

## Revendications

1. Moniteur à distance comprenant :
une unité de communication accessible à distance par au moins un appareil électroménager de façon à pouvoir communiquer avec celui-ci pour recevoir des informations sur un avancement de fonctionnement de l'appareil électroménager à partir d'une unité de communication dans l'appareil électroménager, l'appareil électroménager ayant un micro-ordinateur système (10) pour faire fonctionner un système entier et pour amener l'unité de communication à communiquer des informations sur un avancement de fonctionnement de l'appareil électroménager ; et
**caractérisé par**
une unité d'affichage à distance (200) comprenant :
- une unité d'image d'avatar (23a) pour afficher une image d'avatar selon les données reçues via l'unité de communication, et
- une unité d'affichage de fonctionnement pour afficher des informations sur un avancement de fonctionnement de l'appareil électroménager ayant l'unité d'affichage à distance auquel celui-ci accède de façon à pouvoir communiquer avec celui-ci ;
dans lequel l'image d'avatar a un mouvement commandé en lien avec une représentation sur l'unité d'affichage de fonctionnement, et
dans lequel le moniteur à distance est commandé par le micro-ordinateur système de l'appareil électroménager.

2. Moniteur à distance selon la revendication 1, dans lequel l'affichage de l'image d'avatar et l'avancement de fonctionnement sont réalisés en même temps sur des zones séparées d'un panneau d'affichage, ou à la suite sur une zone entière du panneau d'affichage de façon répétée selon le choix de l'utilisateur.

3. Moniteur à distance selon la revendication 1, dans lequel l'unité d'image d'avatar (23a) est constituée d'un afficheur à cristaux liquides.

4. Moniteur à distance selon la revendication 1, dans lequel l'unité d'affichage de fonctionnement est constituée d'une diode électroluminescente.

5. Moniteur à distance selon la revendication 1, dans lequel l'unité d'affichage à distance (200) comprend en outre un moyen de commande d'affichage pour commander l'unité d'image d'avatar (23a) et l'unité d'affichage de fonctionnement.

6. Moniteur à distance selon la revendication 5, dans lequel le moyen de commande d'affichage (20) comprend :
une première unité de commande pour commander l'unité d'image d'avatar, et
une seconde unité de commande pour commander l'unité d'affichage de fonctionnement.

7. Moniteur à distance selon la revendication 1, comprenant en outre une unité d'entrée de touche (25) ayant une touche de commande d'avatar pour entrer un signal de choix de l'utilisateur pour traiter l'image d'avatar.

8. Moniteur à distance selon la revendication 7, dans lequel l'unité d'entrée de touche (25) peut choisir l'un quelconque des avatars stockés.

9. Moniteur à distance selon la revendication 1, dans lequel l'unité d'affichage à distance (200) comprend en outre une unité de stockage d'informations d'avatar (24) pour stocker l'image d'avatar devant être affichée sur l'unité d'image d'avatar (23a).

10. Moniteur à distance selon la revendication 9, dans lequel l'unité de stockage d'informations d'avatar (24) stocke une pluralité d'images d'avatar.

11. Moniteur à distance selon la revendication 1, dans lequel les unités de communication des appareils électroménagers et l'unité de communication du moniteur à distance réalisent une communication par fil, respectivement.

12. Moniteur à distance selon la revendication 11, dans lequel la communication par fil est un courant porteur en ligne.

13. Moniteur à distance selon la revendication 1, dans lequel les unités de communication des appareils électroménagers et l'unité de communication du moniteur à distance réalisent une communication sans fil, respectivement.

14. Moniteur à distance selon la revendication 13, dans lequel la communication sans fil est une communication RF.

15. Moniteur à distance selon la revendication 1, dans lequel les appareils électroménagers comprennent une machine à laver et un sèche-linge.
